Europäisches Patentamt

European Patent Office

Office européen des brevets

(19)

(11) Veröffentlichungsnummer: **0 236 714**
**A2**

(12) **EUROPÄISCHE PATENTANMELDUNG**

(21) Anmeldenummer: **87101078.1**

(22) Anmeldetag: **27.01.87**

(51) Int. Cl.⁴: **H01B 3/44** , H01B 7/02 ,
C08J 5/18

(30) Priorität: **05.02.86 DE 3603456**

(43) Veröffentlichungstag der Anmeldung:
**16.09.87 Patentblatt 87/38**

(84) Benannte Vertragsstaaten:
**BE DE FR GB IT NL**

(71) Anmelder: **HOECHST AKTIENGESELLSCHAFT**
**Postfach 80 03 20**
**D-6230 Frankfurt am Main 80(DE)**

(72) Erfinder: **Crass, Günther**
**Bachstrasse 7**
**D-6204 Taunusstein 4(DE)**
Erfinder: **Helf, Karl-Eduard**
**Welschstrasse 24**
**D-6200 Wiesbaden(DE)**

(54) **Dielektrische Polyolefinfolie zur Kabelummantelung.**

(57) Die beschriebene Kabelummantelung besteht aus einer mehrschichtigen, biaxial streckorientierten, dielektrischen Polyolefinfolie, deren Kennzeichenmerkmale darin zu sehen sind, daß sie aus einer Basisschicht aus Polypropylen besteht, welche in fein verteilter Form feste anorganische Teilchen in einer Menge im Bereich von 10 bis 40 Gew.-% enthält, bezogen auf das Gesamtgewicht von Polypropylen plus Teilchen, und daß wenigstens eine Oberfläche der Basisschicht von einer Deckschicht aus einem Polyolefin überzogen ist.

EP 0 236 714 A2

## Dielektrische Polyolefinfolie zur Kabelummantelung

Die vorliegende Erfindung betrifft eine mehrschichtige, biaxial streckorientierte, dielektrische Polyolefinfolie zur Kabelummantelung.

Zu Isolationszwecken werden elektrische Kabel üblicherweise mit Schichtstoffen umfassend Kraftpapier und gegebenenfalls Folien aus Kunststoff ummantelt, insbesondere dann, wenn die isolierenden Eigenschaften des Ummantelungsmaterials noch durch eine Imprägnierung mit Isolationsöl unterstützt werden soll.

Derartige Isolationsmaterialien werden in einer Reihe von Druckschriften beschrieben, für die beispielhaft die JP-A-58/15 36 44 (entsprechend CA 100/10: 69539h) genannt sei. Der Einsatz derartiger mit Kraftpapieren kombinierter Isolationsmaterialien erfordert aber viele verschiedene Verfahrensschritte bei der Herstellung der Isolationsmaterialien wie Coronabehandlung, Laminierung, Imprägnierung etc., und zudem müssen die Isolationsschichten, um auch bei sehr hohen elektrischen Spannungen eine ausreichende Durchschlagfestigkeit aufzuweisen, in relativ großer Schichtdicke aufgebracht werden.

Man ist daher dazu übergegangen, für die Kabelummantelung zum Zweck der elektrischen Isolierung Folien aus Polyester, insbesondere aus Polyethylenterephthalat, in Dickenbereichen von 10 bis 100 μm einzusetzen oder Folien enthaltend fluorierte Kohlenwasserstoffe. Isola tionsmaterialien mit Fluor enthaltenden Kohlenwasserstoffen sind z.B. in der EP-A-45 064 beschrieben. Derartige Materialien können zwar in geringen Schichtdicken angewandt werden, sind aber dafür verglichen mit Schichtstoffen auf Basis von Kraftpapier sehr teuer, was, insbesondere da Kabel häufig auch zur Stromleitung über weitere Distanzen eingesetzt werden, oft als sehr beachtlicher Nachteil empfunden wird.

Es bestand daher für die vorliegende Erfindung die Aufgabe, eine Isolationsfolie für die Kabelummantelung zu schaffen, die in relativ geringen Schichtdicken hervorragend gute Durchschlagsfestigkeit aufweist und die zudem auch noch preiswert herstellbar ist.

Gelöst wird diese Aufgabe durch eine Folie der eingangs genannten Gattung, deren Kennzeichenmerkmale darin zu sehen sind, daß sie aus einer Basisschicht aus Polypropylen besteht, welche in fein verteilter Form feste anorganische Teilchen in einer Menge im Bereich von 10 bis 40 Gew.-% enthält, bezogen auf das Gesamtgewicht von Polypropylen plus Teilchen, und daß wenigstens eine Oberfläche der Basisschicht von einer Deckschicht aus einem Polyolefin überzogen ist.

Als bevorzugtes Polypropylen für die Basisschicht wird insbesondere ein isotaktisches Propylenhomopolymeres eingesetzt, welches außer den bereits erwähnten anorganischen Teilchen keine weiteren Zuschlagstoffe enthält. Isotaktisches Polypropylen mit einem n-heptanlöslichen Anteil von weniger als 10 Gew.-% ist besonders bevorzugt. Es können auch Copolymere eingesetzt werden, die zum überwiegenden Anteil aus Polypropylen bestehen. Copolymere von Ethylen und Propylen mit einem Ethylengehalt von weniger als 10 Gew.-% und Copolymere von Propylen mit anderen 1-Olefinen mit 4 bis 8 Kohlenstoffatomen und einem Gehalt dieser 1-Olefine von weniger als 10 Gew.-% stellen typische Beispiele für derartige Copolymere dar.

Die bevorzugten Homo-und Copolymeren haben üblicherweise einen Schmelzpunkt von mindestens 140°C, bevorzugt im Bereich von 150°C bis 170°C. Sie besitzen einen Schmelzflußindex im Bereich von 0,5 g/10 min bis 8 g/10 min bei 230°C und 2,16 kp Belastung (DIN 53 735), bevorzugt von 1,5 g/10 min bis 4 g/10 min.

Bei den anorganischen Teilchen, die der Basisschicht zugesetzt sind, handelt es sich um mit Polypropylen unverträgliche, pulverförmige Materialien. Geeignete anorganische Materialien sind Aluminiumoxid, Aluminiumsulfat, Bariumsulfat, Calziumcarbonat, Magnesiumcarbonat, Silicate wie Aluminiumsilicat (Kaolinton) und Magnesiumsilikat - (Talkum), Siliziumdioxid und/oder Titandioxid, wobei Calziumcarbonat, Siliziumdioxid, Titandioxid oder Mischungen von diesen bevorzugt eingesetzt werden. Calziumcarbonat (Kreide) ist besonders bevorzugt.

Die im Rahmen der vorliegenden Erfindung bevorzugt eingesetzte Menge der anorganischen Teilchen liegt im Bereich von 15 bis 35 Gew.-%, bezogen auf das Gesamtgewicht von Polypropylen plus anorganische Teilchen. Die mittlere Teilchengröße der anorganischen Teilchen liegt im Bereich von 0,2 bis 20 μm, gemessen als Durchmesser der Teilchen, bevorzugt von 2 bis 8 μm.

Die Deckschicht oder die Deckschichten der erfindungsgemäßen mehrschichtigen Isolationsfolie besteht/bestehen aus Polyethylen oder aus Polypropylen oder aus Mischungen oder Copolymeren aus diesen beiden, bevorzugt aus Propylenhomopolymeren. Den Deckschichten und/oder der Basisschicht kann in einer besonderen Ausbildungsform der Erfindung zusätzlich ein Polydiorganosiloxan, bevorzugt ein Polydimethylsiloxan mit einer kinematischen Viskosität von 1 000 bis 100 000 mm²/sec, insbesondere von 5 000 bis 50 000 mm²/sec bei 25°C, zugesetzt sein. Die Menge des Siloxanzusatzes liegt im Bereich von 0,4 bis 3,0 Gew.-%, bezogen auf das Gewicht der Deckschicht(en) oder der Basisschicht. Durch den Siloxanzusatz kann insbesondere erreicht werden, daß die Folie sich besser mit dem als Isolationsöl eingesetzten Tränkmittel benetzen läßt, wobei häufig sogar Polydimethylsiloxan selbst als Tränkmittel verwendet wird. Durch die bessere Benetzbarkeit der Folie werden nicht zuletzt die dielektrischen Isolationseigenschaften der Kabelummantelung verbessert, ferner bewirkt der Polydimethylsiloxanzusatz eine Erniedrigung des Reibungskoeffizienten der Oberfläche der Folie, wodurch verbesserte Verarbeitungseigenschaften der Folie erreicht werden.

Die erfindungsgemäße Folie ist, wie bereits dargelegt, biaxial streckorientiert. Hierzu wird die Schmelze des die Basisschicht bildenden Polymeren enthaltend die anorganischen Teilchen zusammen mit der Schmelze des oder der die Deckschicht(en) bildenden Polymeren gemeinsam durch eine Düse coextrudiert und durch Abschrecken zu einer Vorfolie verfestigt. Die Vorfolie wird anschließend auf Strecktemperatur erhitzt und in zwei senkrecht zueinander verlaufenden Richtungen streckorientiert. Bevorzugt wird in zwei aufeinanderfolgenden Schritten bei einer Temperatur von 120 bis 130°C im Verhältnis von 5 bis 7 zu 1 längsgestreckt und bei einer Temperatur von 160 bis 170°C im Verhältnis von 8 bis 10 zu 1 quergestreckt. Durch die Streckorientierung in den angegebenen Temperaturbereichen und mit den genannten Streckverhältnissen erhält die Folie ein opakes Aussehen. Die Opazität resultiert daher, daß in der Folie bei dem Streckprozeß eine große Anzahl mehr oder weniger kleiner Hohlräume (Vakuolen) oder Mikrorisse in rein zufälliger, unregelmäßiger Verteilung entstehen. Bei dem Streckprozeß wird die Polymermatrix an den Korngrenzen der mit dem Polypropylen unverträglichen anorganischen Teilchen aufgerissen, was zur Entstehung der genannten Hohlräume oder Vakuolen führt. Es versteht sich von selbst, daß diese Vakuolen über das ganze Volumen der die anorganischen Teilchen enthaltenden Basisschicht verteilt sind. Infolge der Brechung des Lichtes im Bereich der Hohlräume und Mikrorisse entsteht das opake Aussehen der Folie.

Nach der Streckorientierung der erfindungsgemäßen Folie schließt sich üblicherweise noch der Verfahrensschritt der Thermonachbehandlung oder Hitzefixierung an. Dabei wird die Folie über einen Zeitraum von 2 bis 20 sec in einem die Kristallisation des Polymeren fördernden Temperaturbereich unter Spannung gehalten, wodurch die Molekülketten in der durch die Streckorientierung bewirkten Lage fixiert werden. Die Folie erhält dadurch eine gute Dimensionsstabilität. Durch die Bildung der Vakuolen und Mikrorisse innerhalb der Basisschicht der Folie bei der Streckorientierung erniedrigt sich die Dichte der erfindungsgemäßen Folie auf einen niedrigeren Wert als sich durch Berechnung aus den Dichten von Polypropylen und den anorganischen Teilchen ergibt. Bevorzugt hat die Basisschicht eine Dichte von höchstens 0,6 g/cm³, besonders bevorzugt von weniger als 0,6 g/cm³.

Für den Einsatz der erfindungsgemäßen Folie zur Kabelummantelung hat es sich als besonders günstig erwiesen, wenn die im vorstehenden beschriebene Folie eine Gesamtdicke im Bereich von 30 bis 100 μm, bevorzugt von 50 bis 100 μm, aufweist. Die Basisschicht soll auf jeden Fall eine größere Schichtdicke aufweisen als die Deckschicht oder die Deckschichten, bevorzugt liegt das Verhältnis der Dicke der Basisschicht zu der Dicke der Deckschicht oder den jeweiligen Dicken der Deckschichten im Bereich von 10 zu 1 bis 50 zu 1.

Durch die erfindungsgemäß bereitgestellte Folie lassen sich auf besonders preisgünstige Weise Kabelummantelungen für mit Isolationsöl getränkte Hochspannungskabel herstellen, deren besonderer Vorteil auch in ihrem geringen Gewicht zu sehen ist, wodurch sich das Gesamtgewicht der ummantelten Kabel erniedrigen läßt. Überraschend war ferner, daß die erfindungsgemäße Folie trotz der großen Anzahl von Vakuolen noch genügend große Festigkeit und auch elastische Eigenschaften besitzt, wie sie für den Einsatz zur Kabelummantelung erforderlich sind.

Die Erfindung soll nachstehend anhand von Zeichnungen beispielhaft noch näher erläutert werden.

Fig. 1 zeigt einen senkrechten Schnitt durch eine Folie mit einer Basisschicht und einer Deckschicht.

Fig. 2 zeigt einen senkrechten Schnitt durch eine Folie mit einer Basisschicht und zwei Deckschichten.

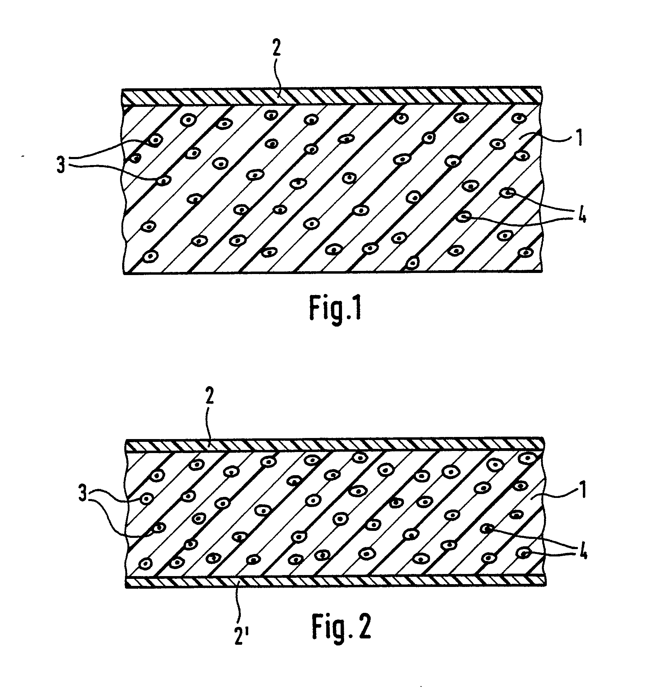

Die Basisschicht 1 in Fig. 1 besteht aus Polypropylen mit den anorganischen Teilchen 4, um die herum sich die Vakuolen 3 gebildet haben. Die Deckschicht 2 kann aus Polypropylen oder Polyethylen bestehen und enthält keine anorganischen Teilchen und keine Vakuolen.

Auch in Fig. 2 sind in der Basisschicht 1 die Vakuolen 3 und die anorganischen Teilchen 4 zu erkennen. Die Deckschichten 2 und 2' sind mit Polydimethylsiloxan modifiziert und enthalten keine anorganischen Teilchen und keine Vakuolen.

0 236 714

**Ansprüche**

1. Mehrschichtige, biaxial streckorientierte, dielektrische Polyolefinfolie zur Kabelummantelung, dadurch gekennzeichnet, daß sie aus einer Basisschicht aus Polypropylen besteht, welche in fein verteilter Form feste anorganische Teilchen in einer Menge im Bereich von 10 bis 40 Gew.-% enthält, bezogen auf das Gesamtgewicht von Polypropylen plus Teilchen, und daß wenigstens eine Oberfläche der Basisschicht von einer Deckschicht aus einem Polyolefin überzogen ist.

2. Folie nach Anspruch 1, dadurch gekennzeichnet, daß die festen anorganischen Teilchen in der Basisschicht ausgewählt sind aus der Gruppe umfassend Silikate, Titandioxid und Calziumcarbonat.

3. Folie nach Anspruch 1 oder 2, dadurch gekennzeichnet, daß die Menge der anorganischen Teilchen in der Basisschicht im Bereich von 15 bis 35 Gew.-% liegt, bezogen auf das Gesamtgewicht von Polypropylen plus anorganische Teilchen.

4. Folie nach einem der Ansprüche 1 bis 3, dadurch gekennzeichnet, daß der mittlere Teilchendurchmesser der anorganischen Teilchen in der Basisschicht im Bereich von 0,2 bis 20 $\mu$m liegt, bevorzugt im Bereich von 2 bis 8 $\mu$m.

5. Folie nach einem der Ansprüche 1 bis 4, dadurch gekennzeichnet, daß das Polyolefin der Deckschicht ein Ethylen-oder Propylenhomopolymeres ist, bevorzugt ein Propylenhomopolymeres.

6. Folie nach einem der Ansprüche 1 bis 5, dadurch gekennzeichnet, daß die Folie beidseitig mit einer Deckschicht überzogen ist.

7. Folie nach einem der Ansprüche 1 bis 6, dadurch gekennzeichnet, daß die Deckschicht oder die Deckschichten als Zuschlagstoff Polydiorganosiloxan in einer Menge von 0,4 bis 3,0 Gew.-% enthält, bezogen auf das Gesamtgewicht der Deckschicht(en).

8. Folie nach einem der Ansprüche 1 bis 7, dadurch gekennzeichnet, daß sie eine Gesamtdicke im Bereich von 30 bis 100 $\mu$m besitzt, bevorzugt von 50 bis 100 $\mu$m.

9. Folie nach einem der Ansprüche 1 bis 8, dadurch gekennzeichnet, daß die Basisschicht eine größere Schichtdicke aufweist als die Deckschicht oder die Deckschichten, wobei das Verhältnis der Dicke der Basisschicht zu den Dicken der Deckschichten bevorzugt im Bereich von 10 zu 1 bis 50 zu 1 liegt.

Fig.1

Fig. 2

HOECHST AKTIENGESELLSCHAFT
86/K 004